# NEUE EUROPÄISCHE PATENTSCHRIFT

(11) **EP 2 150 717 B2**
(45) Veröffentlichungstag und Bekanntmachung des Hinweises auf die Entscheidung über den Einspruch: **15.03.2017**
(45) Hinweis auf die Patenterteilung: 20.11.2013
(21) Anmeldenummer: 08749159.3
(22) Anmeldetag: 25.04.2008
(51) Int. Cl.: F16D 27/00, F16D 37/02

(54) **MAGNETORHEOLOGISCHE DREHMOMENTÜBERTRAGUNGSVORRICHTUNG, DEREN VERWENDUNG SOWIE MAGNETORHEOLOGISCHES DREHMOMENTÜBERTRAGUNGSVERFAHREN**
MAGNETORHEOLOGICAL TORQUE TRANSMISSION DEVICE, THE USE THEREOF, AND MAGNETORHEOLOGICAL TORQUE TRANSMISSION METHOD
DISPOSITIF DE TRANSMISSION DE COUPLE MAGNÉTORHÉOLOGIQUE, SON PROCÉDÉ D'UTILISATION, ET PROCÉDÉ DE TRANSMISSION DE COUPLE MAGNÉTORHÉOLOGIQUE ASSOCIÉ

(30) Priorität: 25.04.2007 DE 102007019584
(43) Veröffentlichungstag der Anmeldung: 10.02.2010
(73) Patentinhaber: Fraunhofer-Gesellschaft zur Förderung der angewandten Forschung e.V., 80686 München (DE)
(72) Erfinder: BÖSE, Holger, 97080 Würzburg (DE); EHRLICH, Johannes, 97355 Wiesenbronn (DE)
(74) Vertreter: Pfenning, Meinig & Partner mbB
(86) Internationale Anmeldenummer: PCT/EP2008/003385
(87) Internationale Veröffentlichungsnummer: WO 2008/131937

(56) Entgegenhaltungen:
- DE-A1-102004 041 650
- DE-T5-112005 001 458
- GB-A- 667 326
- GB-A- 667 326
- GB-A- 708 557
- US-A- 2 673 631
- US-A- 2 709 507
- US-A- 3 358 798
- US-B2- 6 764 520
- US-B2- 7 240 485

## Beschreibung

Die vorliegende Erfindung bezieht sich auf eine magnetorheologische Drehmomentübertragungsvorrichtung, deren Verwendung sowie auf ein entsprechendes magnetorheologisches Drehmomentübertragungsverfahren. Die magnetorheologische Drehmomentübertragungsvorrichtung kann hierbei insbesondere als Bremse oder als Kupplung eingesetzt werden.

Magnetorheologische Flüssigkeiten (MRF) sind Suspensionen von magnetisch polarisierbaren Teilchen in einer Trägerflüssigkeit, deren Viskosität und andere rheologische Eigenschaften in einem Magnetfeld schnell und reversibel verändert werden können. Sie bieten damit eine ideale Grundlage für adaptive Drehmomentübertragungsvorrichtungen (z.B. Kupplungen oder Bremsen), deren übertragene Drehmomente durch das Magnetfeld gesteuert werden. So überträgt beispielsweise in einer Kupplung die MRF zwischen zwei sich mit unterschiedlicher Geschwindigkeit drehenden Platten (nachfolgend auch Vorrichtungsteile genannt) überwiegend durch Scherung ein Drehmoment von einer Platte (Antriebsseite) auf die andere (Abtriebsseite), wobei die Konsistenz der MRF und damit das übertragene Drehmoment über die Stärke des angelegten Magnetfeldes beeinflusst wird. Ist die Platte der Abtriebsseite gegenüber der Rotation blockiert, entsteht eine Bremse mit steuerbarer Bremskraft. Solche magnetorheologischen Kupplungen und Bremsen sind bereits bekannt. Auch MRF, wie sie in der vorliegenden Erfindung eingesetzt werden können, sind bereits bekannt: Das Patent DE 10 2004 041 650 B4, welches hiermit in seiner Gesamtheit in die Offenbarung der vorliegenden Erfindung eingeführt wird, zeigt solche magnetorheologischen Flüssigkeiten.

In einer magnetorheologischen (MR-)Kupplung oder Bremse wird das Magnetfeld durch den Strom in einer Spule erzeugt und durch den Magnetkreis in den aktiven Spalt (nachfolgend auch Drehmomentübertragungsspalt) geführt, in dem die MRF versteift wird. Solche MR-Kupplungen bzw. -Bremsen üben ohne Strom in der Spule eine geringe Drehmomentübertragung aus (Auskuppeln bzw. Freilauf), während mit steigendem Spulenstrom die Drehmomentübertragung immer größer wird (Einkuppeln bzw. Bremsen). Ohne Spulenstrom erfolgt eine minimale Drehmomentübertragung durch die Flüssigkeitsreibung (Schleppmoment).

Die aus dem Stand der Technik bekannten MR-Kupplungen und -Bremsen erzeugen das Magnetfeld durch Elektromagnete in Form von Spulen, d.h. ihr Magnetkreissystem enthält Spulen zur Erzeugung des magnetischen Flusses im Drehmomentübertragungsspalt. Damit ist es nicht möglich, einen gewünschten Betriebszustand mit hoher Drehmomentübertragung ohne den Einsatz von elektrischer Energie zu erzeugen, und es ist kein gutes Fail-Safe-Verhalten der Kupplung bzw. Bremse gegeben, da im Fall eines Ausfalls der elektrischen Energieversorgung in der Kupplung bzw. Bremse nur das minimale Drehmoment übertragen wird.

Aus dem Stand der Technik (GB 708,557 A) ist eine magnetorheologische Kupplung oder Bremse bekannt, bei der sowohl ein Elektromagnet als auch ein Permanentmagnet im Magnetkreis vorgesehen sind. Im Zustand Drehmomentübertragung sind die beiden gegeneinander beweglichen Vorrichtungsteile der Kupplung bzw. Bremse voneinander durch einen schmalen Spalt getrennt, dessen Spaltbreite im Vergleich zu dem Zustand, bei dem kein Drehmoment übertragen wird, verringert ist.

Aufgabe der vorliegenden Erfindung ist es somit, eine magnetorheologische Drehmomentübertragungsvorrichtung zur Verfügung zu stellen, welche die im vorstehenden Absatz genannten Nachteile aus dem Stand der Technik vermeidet.

Diese Aufgabe wird durch die magnetorheologische Drehmomentübertragungsvorrichtung nach Anspruch 1 gelöst. Vorteilhafte Ausgestaltungsformen hierzu beschreiben jeweils die abhängigen Ansprüche.

Die Lösung der erfindungsgemäßen Aufgabe basiert darauf, im zur Erzeugung des magnetischen Flusses im Drehmomentübertragungsspalt ausgebildeten Magnetkreissystem der Drehmomentübertragungsvorrichtung gemäß Anspruch 1 nicht nur mindestens einen Elektromagneten (welcher eine Spule umfasst) vorzusehen, sondern darüberhinaus auch mindestens zwei Permanentmagneten. Die Einstellung des magnetischen Arbeitspunktes (welcher das magnetische Grundfeld bei ausgeschaltetem Spulenstrom bestimmt) erfolgt somit durch das Vorsehen mindestens zweier Permanentmagnete, durch deren Form und/oder Anordnung sowie vorteilhafterweise auch durch das zusätzliche Vorsehen eines nicht-magnetischen Einsatzes sowie durch dessen Form und/oder Anordnung.

Es sind somit mehrere Elektromagneten und/oder Permanentmagneten im Magnetkreissystem möglich

Unter einem Magnetkreissystem wird im Folgenden die Summe aller einzelnen Magnetkreise bzw. magnetischen Kreise der magnetorheologischen Drehmomentübertragungsvorrichtung verstanden. Ebenso steht dieser Begriff für die Summe aller einzelnen Bauelemente (z.B. also Spulen, Permanentmagnete, nicht-magnetische Einsätze, Flussführungselemente bzw. Jochteile (z.B. aus Eisen) ...), die den einzelnen Magnetkreisen angehören bzw. diese ausbilden. Was jeweils gemeint ist, erschließt sich dem Fachmann unmittelbar aus dem jeweiligen Zusammenhang. Unter einem einzelnen Magnetkreis (der zusammen mit den anderen Magnetkreisen das Magnetkreissystem ausbildet) wird im Folgenden ein definierter Raumbereich verstanden, der von den geschlossenen magnetischen Feldlinien eines Magnetfelderzeugers (Permanentmagnet oder Spule) überstrichen wird. Der definierte Raumbereich kann dabei auch durch die geschlossenen Feldlinien mehrerer Magnetfelderzeuger überstrichen werden (die geschlossenen Feldlinien der mehreren Felderzeuger verlaufen dann im Wesentlichen parallel zueinander). Es ist dabei auch nicht ausgeschlossen, dass die Feldlinien eines weiteren Magnetfelderzeugers, welcher nicht dem betrachteten, sondern einem anderen Magnetkreis angehört, abschnittsweise ebenfalls in diesem definierten Raumbereich verlaufen. Die Definition des Magnetkreises bezieht sich hierbei auf einen definierten Betriebszustand des Systems (insbesondere eine definierte Stromflussrichtung in der Spule oder den Spulen des Elektromagneten oder der Elektromagnete): Es ist also nicht ausgeschlossen, dass bei einem anderen Betriebszustand dieselbe räumliche Anordnung und körperliche Ausgestaltung der das System bildenden Elemente (Permanentmagnete, Elektromagnete, nichtmagnetische Einsätze,...) ein anderes Magnetkreissystem ausbildet. So bedeutet nachfolgend z.B. eine Formulierung wie "der Elektromagnet ist in einem Magnetkreis ohne den Permanentmagnet angeordnet" lediglich, dass in einem der beiden (je nach Stromflussrichtung in der Spule des Elektromagneten) möglichen Betriebszustände der den Elektromagneten umfassende Magnetkreis nicht auch den Permanentmagneten umfasst, ohne jedoch auszuschließen, dass im anderen Betriebszustand der Permanentmagnet ebenfalls von diesem Magnetkreis umfasst wird. Ebenso umfasst der Begriff des Magnetkreises all diejenigen Bauelemente oder Bauelementteile (also z.B. Spule, ferromagnetische Gehäuseteile, z.B. als Jochteile ausgebildet, nichtmagnetische Elemente, ...) der Drehmomentübertragungsvorrichtung, welche von besagten geschlossenen Feldlinien des Magnetfelderzeugers überstrichen oder eingeschlossen werden.

In einer vorteilhaften Ausgestaltungsform umfasst das Magnetkreissystem der Drehmomentübertragungsvorrichtung neben der mindestens einen Spule und den mindestens zwei Permanentmagneten darüberhinaus noch mindestens einen magnetflussregulierenden, nichtmagnetischen Einsatz (es können also mehrere solche Einsätze vorhanden sein).

In einer weiteren vorteilhaften Ausgestaltungsform ist die erfindungsgemäße Drehmomentübertragungsvorrichtung so aufgebaut, dass zwei im wesentlichen getrennte (dies wird nachfolgend noch näher beschrieben) Magnetkreise ausgebildet werden (das Magnetkreissystem besteht dann aus diesen beiden Einzel-' kreisen).

Durch die Verwendung eines Permanentmagneten im Magnetkreissystem kann ein magnetisches Basisfeld auch ohne Strom in der Spule erzeugt werden. Durch den zusätzlichen Spulenstrom lässt sich das Magnetfeld, abhängig von der Polarität des Stromes in der Spule, entweder abschwächen oder verstärken. Durch das Basisfeld erzeugt allein der Permanentmagnet ein Grunddrehmoment ohne Energieeinsatz. Damit kann das für den normalen Betriebszustand erforderliche Drehmoment vorgegeben oder ein Fail-Safe-Verhalten für den Fall gewährleistet werden, dass die elektrische Energieversorgung ausfällt.

Die vorliegende Erfindung beschreibt somit MR-Drehmomentübertragungsvorrichtungen, die
- die Einstellung des magnetischen Arbeitspunkts (magnetische Flussdichte im aktiven MR-Spalt) in einem sehr weiten Bereich und außerdem
- einen besonders großen Variationsbereich der magnetischen Flussdichte im aktiven MR-Spalt (Drehmomentübertragungsspalt)
ermöglichen. Damit können das zu übertragende Drehmoment der Vorrichtung ohne Energiezufuhr in einem sehr weiten Bereich auf einen gewünschten Wert eingestellt, sehr kleine Minimaldrehmomente und gleichzeitig eine hohe Variabilität des Drehmoments durch den Strom in der Spule erzeugt werden.

Hierzu enthält die erfindungsgemäße Drehmomentübertragungsvorrichtung ein Magnetkreissystem, welches mindestens eine Spule, mindestens zwei Permanentmagnete sowie vorteilhafterweise mindestens einen nichtmagnetischen Einsatz enthält. Durch die Auswahl des nicht-magnetischen Einsatzes bzw. der nichtmagnetischen Einsätze kann die magnetische Flussdichte im aktiven MR-Spalt für den Fall, dass kein Strom in der Spule bzw. in den Spulen fließt, in genau der gewünschten Weise eingestellt werden. Dabei ist es vorteilhaft, wenn die Spulen und Permanentmagnete in unterschiedlichen Magnetkreisen des Magnetkreissystems angeordnet werden. Damit wird die Gefahr der Depolarisierung der Permanentmagnete durch das Magnetfeld der Spulen vermieden.

In einer Ausführungsform enthält die erfindungsgemäße MR-Drehmomentübertragungsvorrichtung mindestens eine Spule, zwei Permanentmagnete und mindestens zwei aktive MR-Spalte.

Hierbei wird eine symmetrische Anordnung der Spule und der beiden Permanentmagnete auf einer Achse bevorzugt, d.h. die Spule befindet sich zwischen den beiden Permanentmagneten. Damit kann hier die magnetische Flussführung aus drei Magnetkreisen aufgebaut werden. In einem solchen Magnetkreissystem verläuft der durch die Spule erzeugte magnetische Fluss im Wesentlichen durch die beiden aktiven MR-Spalte und nicht durch die Permanentmagnete, wodurch die Gefahr der Depolarisierung der Permanentmagnete vermieden wird. Außerdem verläuft der magnetische Fluss jedes der beiden Permanentmagnete nur durch jeweils einen aktiven MR-Spalt, wodurch eine höhere magnetische Flussdichte erzeugt wird als beim Durchfluss durch beide aktive MR-Spalte.

Bei der vorliegenden Erfindung können die aktiven MR-Spalte bzw. Drehmomentübertragungsspalte entweder parallel zur Rotationsachse (axiales Design entsprechend der aus dem Stand der Technik bekannten Glockenkonfiguration) oder senkrecht zur Rotationsachse bzw. Drehachse angeordnet werden (radiales Design entsprechend der aus dem Stand der Technik bekannten Scheibenkonfiguration). Darüberhinaus können auch mehrere einzelne MR-Spalte parallel zueinander angeordnet werden, um durch die größere Scherfläche das übertragbare Drehmoment zu erhöhen (Lamellenanordnung der die Spalte begrenzenden Wände). Ist nachfolgend von einem Drehmomentübertragungsspalt die Rede, so wird hierunter sowohl das gesamte, durch die MRF gefüllte bzw. füllbare Volumen des Spaltes verstanden sowie auch die einzelnen (im Wesentlichen parallel zueinander angeordneten) Spaltabschnitte. Was jeweils gemeint ist, erschließt sich dem Fachmann unmittelbar aus dem jeweiligen Zusammenhang.

Weitere Ausgestaltungen der erfindungsgemäßen Drehmomentübertragungsvorrichtung bestehen darin, dass als steuerbares Material anstatt der MRF ein magnetorheologisches Gel (MRG), ein magnetorheologisches Elastomer (MRE) oder ein magnetorheologischer Schaum (MRS) verwendet wird. Ein MRG ist ein Material, welches im Gegensatz zu einer MRF zwar weich, aber nicht flüssig ist. In Analogie zu einer MRF kann es irreversibel beliebig deformiert werden und sich im Magnetfeld analog zu einer MRF versteifen. Ein MRE ist ein vernetztes Material, welches daher eine vorgegebene Form aufweist, aus der es reversibel nur begrenzt deformiert werden kann. Ein MRS ist ein Elastomerschaum, dessen Poren mit einer MRF gefüllt sind. Wie MRE weist auch ein MRS eine vorgegebene Form auf, aus der es reversibel nur begrenzt deformiert werden kann.

Mögliche Anwendungen der erfindungsgemäßen Drehmomentübertragungsvorrichtung sind elektrisch steuerbare Kupplungen und Bremsen, bei denen das übertragene Drehmoment über das durch die Spule bzw. die Spulen erzeugte Magnetfeld verändert wird. Durch den Permanentmagneten bzw. die Permanentmagnete und den vorteilhaften nicht-magnetischen Einsatz bzw. die nichtmagnetischen Einsätze wird dabei ein gewünschtes Grunddrehmoment ohne Spulenstrom für einen bestimmten Betriebszustand oder für ein Fail-Safe-Verhalten eingestellt.

Weitere Anwendungen sind Feststell- oder Blockiervorrichtungen. Dabei wird das Blockierdrehmoment ohne Energieeinsatz erzeugt und durch den Spulenstrom aufgehoben. Hiermit lassen sich beispielsweise Sicherheitsschalter realisieren.

Darüberhinaus können die erfindungsgemäßen Drehmomentübertragungsvorrichtungen auch für haptische Geräte bzw. als Mensch-Maschine-Schnittstellen genutzt werden. Dabei wird ein für den Benutzer deutlich fühlbares Grunddrehmoment durch den oder die Permanentmagnete erzeugt und durch den oder die Elektromagnete entweder abgeschwächt oder verstärkt.

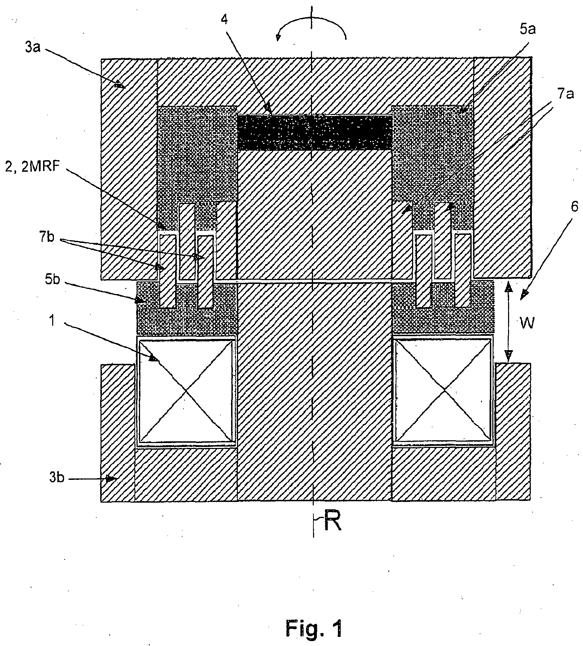

Nachfolgend wird die vorliegende Erfindung an zwei Ausführungsbeispielen genauer dargestellt (von denen das Ausführungsbeispiel nach den Figuren 1 bis 5 nicht die Erfindung zeigt, aber Aspekte der Erfindung zeigt, die zum Verständnis der Erfindung notwendig sind. Das Ausführungsbeispiel 6 bis 10 zeigt die Erfindung).
- Figur 1: zeigt eine magnetorheologische Kupplung in Schnittansicht.
- Figur 2: zeigt die magnetorheologische-Kupplung der Figur 1 mit dem durch den Permanentmagneten hervorgerufenen Magnetfeld.
- Figur 3: zeigt den Betrieb der magnetorheologische Kupplung aus Figur 1 unter Magnetfeldverstärkung mit der Spule.
- Figur 4: zeigt die magnetorheologische Kupplung der Figur 1 im Zustand der Abschwächung der Flussdichte durch Verpolen des Elektromagneten.
- Figur 5: zeigt den Drehmomentübertragungsspalt der Vorrichtung der Figur 1 in vergrößerter Ansicht.
- Figur 6: zeigt eine zweite, erfindungsgemäße magnetorheologische Kupplung (symmetrische Vorrichtung) in Schnittansicht.
- Figur 7: zeigt schematisch den grundlegenden Aufbau der magnetorheologische Kupplung nach Figur 6.
- Figur 8: zeigt den Betrieb der erfindungsgemäßen magnetorheologische Kupplung aus Figur 6 mit dem durch die Permanentmagnete hervorgerufenen Magnetfeld.
- Figur 9: zeigt den Betrieb der erfindungsgemäßen magnetorheologischen Kupplung aus Figur 6 unter Magnetfeldverstärkung mit der Spule.
- Figur 10: zeigt die erfindungsgemäße magnetorheologische Kupplung der Figur 6 im Zustand der Abschwächung der Flussdichte durch Verpolen des Elektromagneten.

### Ausführungsbeispiel 1: (Aspekte der Erfindung zeigend)

Figur 1 zeigt eine magnetorheologische Kupplung in einer Schnittansicht durch die Rotationsachse R. Die gezeigte magnetorheologische Kupplung ist rotatiönssymmetrisch um die Rotationsachse R aufgebaut. Sie umfasst ein erstes Vorrichtungsteil bzw. Kupplungsteil 3a, 4, 5a, 7a sowie ein davon durch den Drehmomentübertragungsspalt 2, welcher mit einer MRF 2MRF gefüllt ist, getrenntes zweites Kupplungsteil 1, 3b, 5b, 6. Die beiden Kupplungsteile sind wie nachfolgend näher beschrieben aufgebaut. Beide Kupplungsteile sind hier um die Rotationsachse zentrisch angeordnet und um diese gegeneinander bzw. relativ zueinander rotierbar.

Das erste Kupplungsteil umfasst ein Gehäuse 3a aus ferromagnetischem Material. Dieses Gehäuse 3a umfasst den zentrisch auf der Rotationsachse R angeordneten Permanentmagneten 4. Dieser ist hier in Axialrichtung bzw. Rotationsachsrichtung magnetisiert. Der Permanentmagnet 4 ist radial (also an seinem Außenumfang) von einem nicht-magnetischen Einsatz 5a, welcher ebenfalls vom Gehäuse 3a umschlossen wird, umgeben. Der nicht-magnetische Einsatz 5a ist hier als dreidimensionaler, fester Formkörper ausgeführt. Der nichtmagnetische Einsatz besteht hier aus einem mit Luft gefüllten Aluminiumhohlkörper (Gewichtsersparnis), er kann aber auch ganz aus Aluminium, jeglicher Art von Kunststoff und/oder aus Edelstahl bestehen oder diese Materialien oder beliebige Kombinationen davon aufweisen. Bei geeigneter konstruktiver Ausgestaltung (so dass z.B. die Halterung der Elemente 7a sichergestellt ist), kann der Einsatz auch ganz aus Luft bestehen.

Auf der dem zweiten Kupplungsteil zugewandten Seite sind in den Formkörper 5a mehrere Lamellen aus ferromagnetischem Material 7a integriert. Diese Lamellen 7a sind radial beabstandet von der Rotationsachse R zentrisch um diese angeordnet, aufgrund der Rotationssymmetrie der Anordnung somit als dünnwandige Hohlzylinder, deren Wände parallel zur Rotationsachse R verlaufen, ausgebildet. Diese Lamellen aus ferromagnetischem Material 7a bilden zusammen mit ihren Gegenstücken 7b (siehe nachfolgend) des zweiten Kupplungsteils aufgrund ihres reißverschlussförmigen Ineinandergreifens den mit der magnetorheologischen Flüssigkeit 2MRF gefüllten MR-Spalt bzw. Drehmomentübertragungsspalt 2 zwischen den beiden Kupplungsteilen aus. Der Drehmomentübertragungsspalt verläuft somit im gezeigten Schnitt durch die Rotationsachse gesehen mäanderförmig, wobei die aktiven MR-Spaltabschnitte (also diejenigen, in die die magnetischen Feldlinien aus den benachbarten Wandungen der ferromagnetischen Materialien 7a, 7b senkrecht eintreten) parallel zur Rotationsachse R verlaufen. Die magnetorheologische Kupplung ist somit in Glockenkonfiguration bzw. im axialen Design ausgebildet.

Das benachbart zum ersten Kupplungsteil auf der anderen Seite des MR-Spalts 2 angeordnete zweite Kupplungsteil weist ebenfalls ein Gehäuseteil 3b aus ferromagnetischem Material auf. In dieses Gehäuseteil 3b ist die Spule 1 des Elektromagneten radial beabstandet zur Rotationsachse R verlaufend eingebettet. Der Elektromagnet ist somit in Form eines im Querschnitt quaderförmigen Hohlzylinders, dessen Symmetrieachse mit der Rotationsachse zusammenfällt, angeordnet. Auf der spaltzugewandten Seite des zweiten Kupplungsteils sind angrenzend an die Spule 1 weitere nicht-magnetische Formkörper 5b aus demselben Material wie die Formkörper 5a des ersten Kupplungsteils angeordnet. In diese sind die vorbeschriebenen Lamellengegenstücke 7b aus ferromagnetischem Material eingebettet. Diese sind ebenso wie die Lamellenelemente 7a des ersten Kupplungsteils ausgebildet und so angeordnet, dass sie reißverschlussartig in die Lamellenanordnung 7a eingreifen. Auf der dem MRF-Spalt 2 zugewandten Seite weist das zweite Kupplungsteil umfangsseitig eine radial beabstandet zur Rotationsachse R verlaufende Aussparung 6 (Luftspalt bzw. Steuerspalt) auf. Diese weist in Rotationsachsrichtung die Weite w auf. Durch Wahl dieser Weite w kann die Einstellung des stromlosen Arbeitspunkts der magnetorheologischen Kupplung gewählt werden. Ebenso dient dieser Luftspalt der Trennung der Kupplungsseiten.

Im vorliegenden Fall stellt das zweite Kupplungsteil (das in der gezeigten Figur Untenliegende) die Antriebsseite dar. Rotiert diese, so überträgt sie, bei ausreichend hoher Magnetfeldstärke, bei der sich die MRF 2MRF im Spalt 2 versteift, ein Drehmoment auf die Abtriebsseite (erstes Kupplungsteil). Die genaue Funktionsweise der Drehmomentübertragung ist dem Fachmann hierbei bekannt. Ebenso ist dem Fachmann bekannt, dass die gezeigte Vorrichtung auch als Bremse ausgebildet sein kann bzw. verwendet werden kann. Die Kupplung/Bremse wird somit durch den Drehmomentübertragungsspalt 2 in zwei Teile geteilt, wobei je nach Betriebsmodus ein Teil ruht (Bremse) oder beide Teile mit unterschiedlichen Geschwindigkeiten um die Rotationsachse R rotieren (Kupplung).

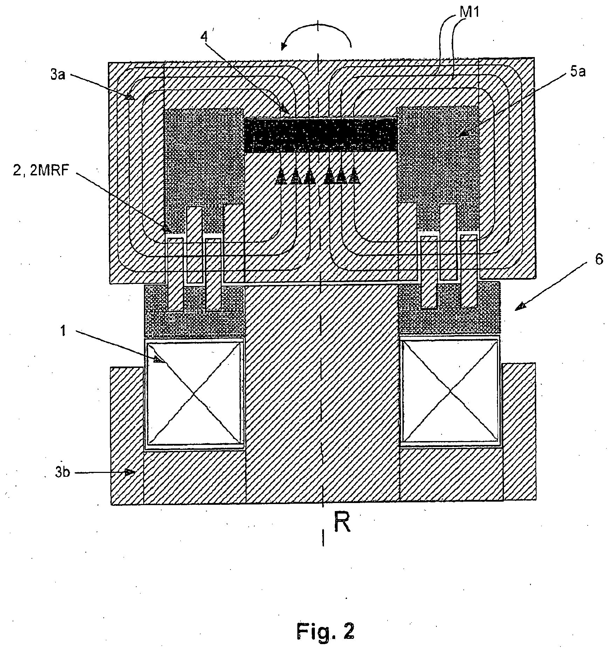

Figur 2 zeigt nun das Magnetkreissystem der magnetorheologischen Kupplung aus Figur 1 in dem Betriebsmodus nur mit dem Permanentmagneten 4 (also ohne Spulenstrom). Nur im ersten Magnetkreis liegt in diesem Betriebsmodus ein magnetisches Feld vor (Feldlinien M1). Der erste Magnetkreis umfasst hierbei das ferromagnetische Gehäuse 3a des ersten Kupplungsteils, den Permanentmagneten 4, die Lamellenanordnung 7 sowie den von den Magnetfeldlinien des Permanentmagneten umschlossenen ersten Formkörper 5a bzw. überstreicht mit seinen geschlossenen Feldlinien diese Bauelemente oder umschließt sie. Im vorliegenden Fall ist der Formkörper 5a radial umfangsseitig des Permanentmagneten 4 angeordnet. In einer alternativen Variante können der Formkörper 5a und der Permanentmagnet 4 jedoch auch so ausgebildet sein, dass sich der nicht-magnetische Formkörper im Permanentmagnet befindet bzw. von diesem umschlossen wird.

Durch die nicht-magnetische Glockenhalterung 5a und den Steuerungsluftspalt 6 wird der magnetische Fluss des Permanentmagneten 4 durch den Drehmomentübertragungsspalt 2 geführt. Ein wesentlicher Vorteil dieser Geometrieanordnung ist es, dass durch den Luftspalt 6, welcher hier ebenso wie die Formkörper 5a, 5b als nicht-magnetischer Einsatz dient, ein relativ hohes Drehmoment nur durch den Permanentmagneten 4 alleine erzeugt werden kann. Dieser stromlose Arbeitspunkt kann durch die Luftspaltweite w voreingestellt werden. Ein weiterer Vorteil ist es, dass der Permanentmagnet 4 durch die Trennung der beiden Magnetkreise (hier gezeigt erster Magnetkreis mit den Magnetfeldlinien M1, zweiter Magnetkreis siehe nachfolgend) nicht entgegen seiner Magnetisierungsrichtung durchflutet wird und somit nicht irreversibel geschwächt wird. Die Trennung der beiden Magnetkreise erfolgt hier dadurch, dass der Permanentmagnet 4 und die Spule 1 in Drehachsrichtung R gesehen beabstandet zueinander und in den unterschiedlichen Kupplungsteilen angeordnet werden.

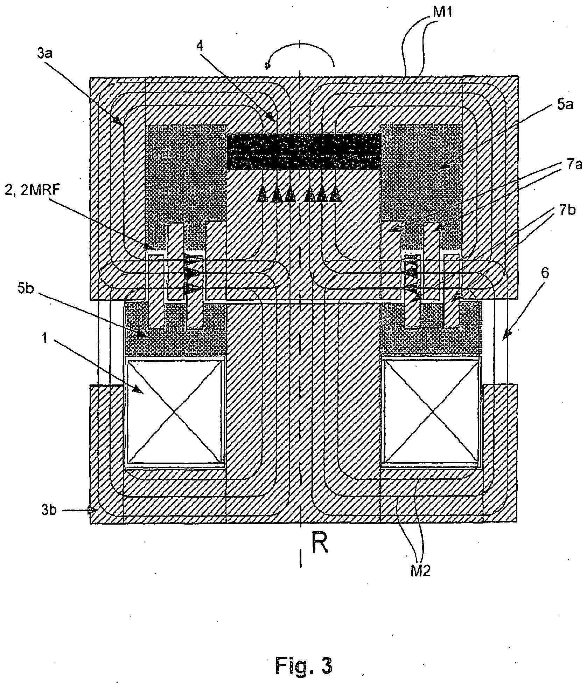

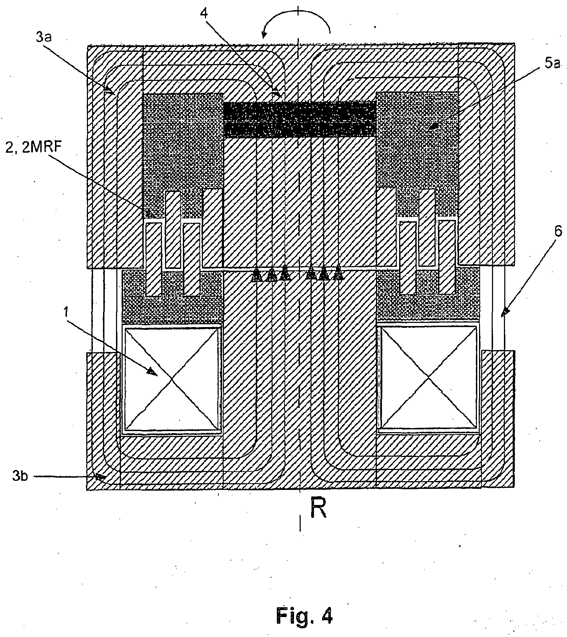

Figur 3 zeigt nun zusätzlich den zweiten Magnetkreis (Magnetfeldlinien M2), welcher durch die Spule 1, den Formkörper 5b, den Gehäuseabschnitt 3b des zweiten Kupplungsteils sowie die Lamellenanordnungen 7a und 7b ausgebildet wird bzw. welcher diese Elemente einschließt oder überstreicht. Durch Einschalten des Stroms der Spule lässt sich das Magnetfeld im MRF-Spalt somit erhöhen. Hierbei ist darauf zu achten, dass das Magnetfeld die richtige Orientierung besitzt, die Stromrichtung in der Spule 1 also so gewählt wird, dass sich im Bereich des Drehmomentübertragungsspalts 2 die Magnetfeldlinien M1 des ersten Magnetkreises und die Magnetfeldlinien M2 des zweiten Magnetkreises additiv überlagern. Ansonsten kommt es zu einer Abschwächung der Flussdichte im Drehmomentübertragungsspalt 2 (siehe Abbildung 4). Die Luftspaltweite w ist so einzustellen, dass mit Hilfe des Elektromagneten (bei Stromrichtung im Elektromagnet bzw. in der Spule 1 wie gezeigt) eine Abschwächung auf ein Drehmoment nahe des Schleppmoments (Leerlaufmoment ohne Magnetfeld in der magnetorheologischen Flüssigkeit 2MRF) möglich ist.

Figur 4 zeigt den Magnetfeldlinienverlauf, wenn die Stromrichtung in der Spule 1 entgegengesetzt gewählt wird als in Figur 3 gezeigt (Verpolen des Elektromagneten).

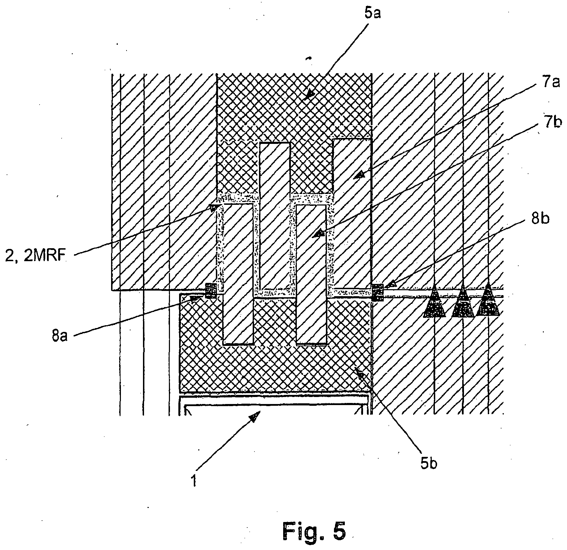

Figur 5 zeigt einen Ausschnitt des Drehmomentübertragungsspalts 2 der Figur 1 in Vergrößerung. Gut zu sehen ist der im Schnitt mäanderförmige Verlauf des Drehmomentübertragungsspalts 2, welcher durch die reißverschlussartig ineinandergreifenden Lamellenanordnungen 7a, 7b der beiden Kupplungsteile realisiert wird. Der Drehmomentübertragungsspalt 2 ist hier ganz mit der MRF 2MRF gefüllt (schattierte Bereiche). Um ein Auslaufen der MRF im Ruhezustand und/oder in der Rotation zu verhindern, ist der mit der MRF aufgefüllte Drehmomentübertragungsspaltabschnitt sowohl auf der der Drehachse R zugewandten Seite, als auch auf der gegenüberliegenden abgewandten Seite jeweils mit Dichtungselementen 8a, 8b versehen.

### Ausführungsbeispiel 2 (Erfindung):

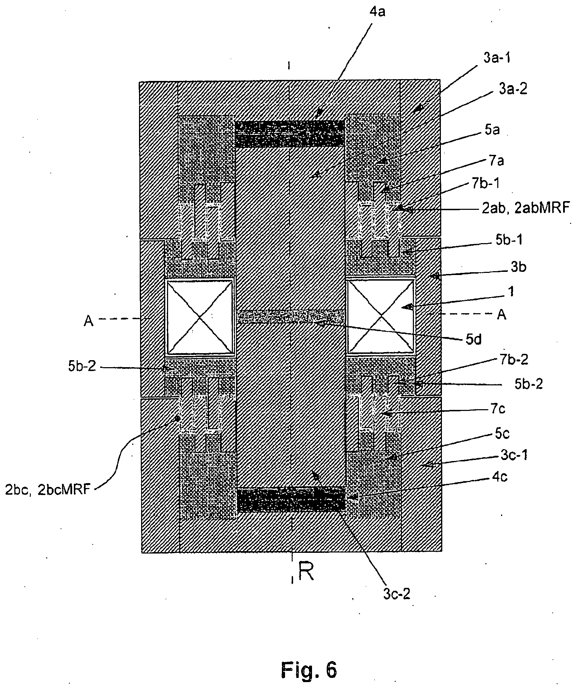

Figur 6 zeigt eine symmetrisch aufgebaute magnetorheologische Drehmomentübertragungsvorrichtung, welche einen Elektromagneten und zwei Permanentmagneten aufweist. Mit symmetrisch ist hier gemeint, dass die gezeigte Vorrichtung nicht nur symmetrisch um die Rotationsachse R ist, sondern auch spiegelsymmetrisch zur Ebene A-A, welche die Vorrichtung senkrecht zur Rotationsachse R auf halber Höhe durchschneidet.

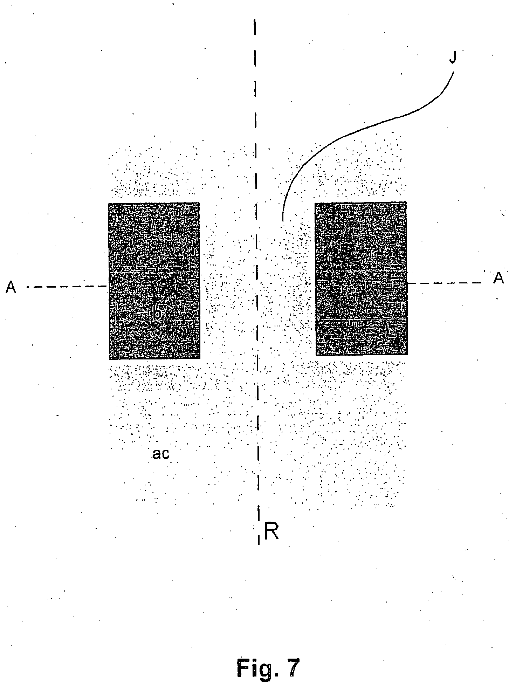

Das erste Vorrichtungsteil (nachfolgend auch als Außenteil bezeichnet) ist im gezeigten Schnitt doppelT-förmig (siehe auch Fig. 7) und besteht aus einem oberen Außenteil und einem unteren Außenteil. Das obere Außenteil weist die nachfolgend noch näher beschriebenen Elemente 3a-1, 3a-2, 4a, 5a, 7a sowie den oberhalb der Ebene A-A liegenden Abschnitt des Elements 5d auf. Das untere Außenteil des Außenteils weist die nachfolgend ebenfalls noch näher beschriebenen Elemente 3c-1, 3c-2, 4c, 5c, 7c und den unterhalb der Ebene A-A liegenden Abschnitt des Elements 5d auf.

Im gezeigten Fall stellt das Außenteil die Abtriebsseite dar, das nachfolgend noch näher beschriebene Mittelteil ist dann als Antriebs-Vorrichtungsteil ausgestaltet (Kupplung). Es ist jedoch auch möglich, das Außenteil als Antriebsseite zu betreiben und das Mittelteil als Abtriebsseite. Im Falle der Ausgestaltung als Bremse ist es möglich, das Außenteil als abzubremsendes Vorrichtungsteil (festgebremst) zu betreiben und das Mittelteil als relativ zur Umgebung feststehend angeordneter Teil. Auch ein umgekehrter Betrieb ist möglich.

Wie auch Figur 7 schematisch zeigt, unterteilt sich somit die gezeigte magnetorheologische Drehmomentübertragungsvorrichtung (Kupplung oder Bremse) in zwei Vorrichtungsteile, das Außenteil ac und das Mittelteil b. Das Mittelteil b ist hierbei wie nachfolgend noch näher beschrieben durch den MRF-Spalt und ggf. weitere Spaltabschnitte (in denen die beiden Teile b und ac formschlüssig aneinander angrenzen, jedoch nicht miteinander verbunden sind) vom Außenteil ac getrennt und relativ zu diesem um die Rotationsachse R rotierbar. Das Mittelteil b ist außenumfangsseitig des Jochabschnitts J des doppel-T-förmigen Außenteils beabstandet von der Rotationsachse R angeordnet.

Der obere Abschnitt des Außenteils (bzw. das obere Außenteil) weist einen ersten ferromagnetischen Gehäuseabschnitt 3a-1 auf, welcher wie der in Figur 1 gezeigte Gehäuseabschnitt 3a das obere Außenteil außenseitig abschließt. Darin sind (wie bereits im in Figur 1 gezeigten Fall) der nicht-magnetische Einsatz 5a, der Permanentmagnet 4a sowie die Lamellenanordnung 7a angeordnet. Der Jochabschnitt J des oberen Außenteils wird durch ein weiteres ferromagnetisches Gehäuseteil 3a-2 ausgebildet, welches sich entlang der Achse R von der Unterseite des Permanentmagneten 4a bis angrenzend an einen weiteren nicht-magnetischen Einsatz 5d (nachfolgend auch als nicht-magnetische Unterbrechung bezeichnet) erstreckt. Die nicht-magnetische Unterbrechung 5d ist spiegelsymmetrisch zur Ebene A-A angeordnet, also so, dass ihre dem oberen Außenteil zugeordnete obere Hälfte oberhalb der Ebene A-A liegt und ihre untere, dem unteren Außenteil zugeordnete Hälfte unterhalb dieser Ebene A-A liegt. Der ferromagnetische Gehäuseteil 3a-2 ist somit konzentrisch um die Rotationsachse R innerhalb des nicht-magnetischen Einsatzes 5a und der Lamellenanordnung 7a angeordnet.

Das untere Außenteil ist ebenso wie das obere Außenteil aufgebaut (ferromagnetische Gehäuseteile 3c-1 und 3c-2, Permanentmagnet 4c, nicht-magnetischer Einsatz 5c sowie Lamellenanordnung 7c und unterer Abschnitt des Elements 5d), jedoch unterhalb der Ebene A-A spiegelsymmetrisch zum oberen Außenteil angeordnet.

Das relativ zum Außenteil um die Drehachse R rotierbare Mittelteil weist außenumfangsseitig den Gehäuseabschnitt 3b aus einem ferromagnetischen Material in Form eines beabstandet von der Rotationsachse R umlaufenden Hohlzylinders auf. Innerhalb dieses Wandabschnitts 3b und außerhalb des Jochabschnitts J des Außenteils ist spiegelsymmetrisch zur Ebene A-A und somit auf Höhe der nicht-magnetischen Unterbrechung 5d die Spule 1 des Elektromagneten angeordnet. Oberhalb der Spule 1 und somit beabstandet von der Ebene A-A ist der nicht-magnetische Einsatz 5b-1, in welchem die Lamellenanordnung 7b-1 angeordnet ist, positioniert. Auf der gegenüberliegenden, dem unteren Außenteil zugewandten Seite ist dementsprechend beabstandet von der Ebene A-A der nicht-magnetische Einsatz 5b-2, in dem die Lamellenanordnung 7b-2 eingreifend angeordnet ist, untergebracht. Wie dies bereits zur Figur 1 beschrieben wurde, greifen die Lamellenabschnitte 7b-1 reißverschlussartig in die Lamellenabschnitte 7a des oberen Außenteils ein. Dasselbe gilt für den Eingriff der Lamellenabschnitte 7b-2 in die Lamellenabschnitte 7c des unteren Außenteils.

Zwischen den Lamellenabschnitten 7a und 7b-1 verläuft mäanderförmig der erste Drehmomentübertragungsspalt 2ab zwischen dem oberen Außenteil und dem Mittelteil. Ebenso verläuft zwischen dem unteren Außenteil und dem Mittelteil der zweite Drehmomentübertragungsspalt 2bc mäanderförmig zwischen den Lamellenanordnungen 7b-2 und 7c. Der erste Drehmomentübertragungsspalt ist mit einer magnetorheologischen Flüssigkeit 2abMRF gefüllt, der zweite entsprechend mit der MRF 2bcMRF. Die beiden MRF-Spalte 2ab und 2bc weisen hier eine (nicht gezeigte) Verbindung auf, so dass ein gemeinsames Befüllen dieser Spalte mit der MRF möglich ist.

Die in Figur 6 gezeigte Drehmomentübertragungsvorrichtung stellt somit eine symmetrisch modifizierte Version der in Figur 1 gezeigten Drehmomentübertragungsvorrichtung dar. Ein wesentlicher Vorteil dieser Anordnung ist die doppelte Anzahl an MRF-Spalten (zwei Spalte 2ab und 2bc) und die Hinzufügung eines weiteren Permanentmagneten (zwei Permanentmagnete 4a und 4c) sowie die Verlagerung der nicht-magnetischen Unterbrechung 5d in die Mitte des Jochabschnitts J (in Bezug auf die Ebene A-A gesehen). Die beiden Permanentmagnete weisen hier notwendigerweise die gleiche axiale Magnetisierungsrichtung (parallel zur Rotationsachsrichtung R) auf, hier beispielsweise nach oben, also vom unteren Außenteil zum oberen Außenteil hin gerichtet. Dies ist notwendig, da die beiden Permanentmagnete sich sonst gegenseitig schwächen würden. Damit ein magnetischer Schluss über die beiden MRF-Spalte möglich ist, muss die nicht-magnetische Unterbrechung 5d zwischen den beiden Permanentmagneten 4a und 4b sitzen. In Rotationsachsrichtung R gesehen sind die folgenden Elemente somit entlang der Rotationsachse R und symmetrisch um diese angeordnet: Permanentmagnet 4a, Spule 1 samt nicht-magnetischer Unterbrechung 5d und Permanentmagnet 4b. Durch die Dicke der nicht-magnetischen Unterbrechung 5d in Richtung der Achse R (also senkrecht zur Ebene A-A) ist der magnetische Arbeitspunkt der Drehmomentübertragungsvorrichtung auf gewünschte Art und Weise einstellbar.

Ist die gezeigte Drehmomentübertragungsvorrichtung als Bremse ausgebildet, so ist eines der beiden Vorrichtungsteile starr angeordnet. Vorzugsweise ist dies das Mittelteil, da so die Spule 1 sich dauerhaft in einem bezogen auf die Umgebung unbewegten Zustand befindet. Ist die gezeigte Drehmomentübertragungsvorrichtung als Kupplung ausgebildet, so bildet ein Teil der Anordnung (vorzugsweise das Mittelteil) die Antriebsseite, der andere die Abtriebsseite. In beiden Fällen können die beiden Vorrichtungsteile relativ zueinander um die Rotationsachse R rotieren.

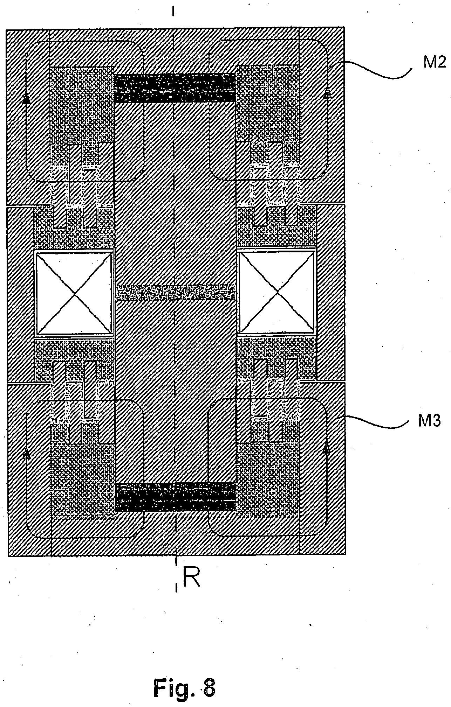

Figur 8 zeigt die Drehmomentübertragungsvorrichtung aus Figur 6 im Betriebsmodus, in dem lediglich durch die beiden Permanentmagneten 4a und 4c ein magnetischer Fluss erzeugt wird: In diesem Fall wird durch den Permanentmagneten 4a (Magnetfeldlinien M2) über die Elemente 3a-1, 3a-2, 5a, 7a und 7b-1 ein erster Magnetkreis ausgebildet, welcher ein Magnetfeld im Spalt 2ab in der magnetorheologischen Flüssigkeit 2abMRF erzeugt. Ebenso wird ein zweiter Magnetkreis (Magnetfeldlinien M3), welcher die Elemente 3c-1, 3c-2, 5c, 7b-2 und 7c umfasst und ein Magnetfeld im Spalt 2bc in der MRF 2bcMRF ausbildet durch den Permanentmagneten 4c ausgebildet. Die gezeigte Feldlinienrichtung ergibt sich dadurch, dass die beiden Permanentmagnete die gleiche magnetische Orientierungsrichtung haben, um sich nicht gegenseitig zu schwächen bzw. zu entmagnetisieren. Im Gegensatz zur unsymmetrischen Variante (Figur 1) sitzt die nicht-magnetische Unterbrechung 5d in Bezug auf die Achse R gesehen innerhalb der Spule 1 und nicht (wie der entsprechende Luftspalt 6 in Figur 1) außen an der Spule. Die nicht-magnetische Unterbrechung 5d ist unbedingt notwendig, da nur so eine Führung des magnetischen Flusses über die Permanentmagnete bzw. eine Trennung der Magnetkreise des Magnetkreissystems möglich ist. Die beiden Permanentmagnete 4a und 4c erzeugen somit ein stromloses Grunddrehmoment. Zur besseren Übersichtlichkeit wurden hier in Figur 8 wie auch in den beiden nachfolgenden Figuren die Bezugszeichen der Bauelemente weggelassen.

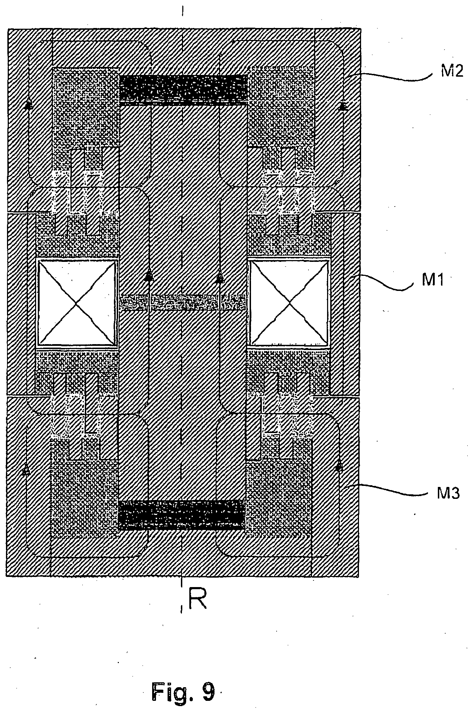

Figur 9 zeigt die Drehmomentübertragungsvorrichtung nach Figur 6 im Betriebsmodus der Verstärkung bei eingeschaltetem Magnetfeld des Elektromagneten. In diesem Falle wird durch den Stromfluss in der Spule 1 ein dritter Magnetkreis (Magnetfeldlinien M1) ausgebildet, welcher die Elemente 3b, 5b-1, 5b-2, 3a-2, 3c-2, 7a, 7b-1, 7b-2 und 7c umfasst und somit das von den Permanentmagneten in den beiden Spalten erzeugte Magnetfeld additiv überlagert. Die Figur 9 zeigt somit die Drehmomentübertragungsvorrichtung im Verstärkungsmodus. Zu dem vorhandenen Magnetfeld durch die Permanentmagnete addiert sich das Magnetfeld, welches durch die Spule erzeugt wird. Diese Magnetfeldaddition funktioniert nur, wenn wie vorbeschrieben die beiden Permanentmagnete die gleiche magnetische Vorzugsrichtung aufweisen, da sonst ein Permanentmagnet verstärkt würde und einer geschwächt würde, es also in Summe kaum eine Veränderung geben würde. Über die Dicke der nicht-magnetischen Unterbrechung 5d lässt sich die Stärke des Magnetfelds der Spule beeinflussen (durch den nicht-magnetischen Einsatz 5d verringert sich deren Induktivität). Eine genaue Auslegung des Mittelteils, insbesondere in Bezug auf das Element 5d, ist also unerlässlich.

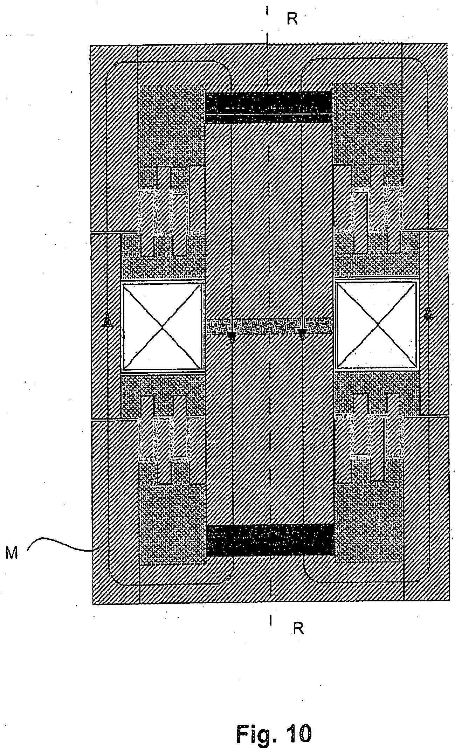

Figur 10 zeigt die Drehmomentübertragungsvorrichtung nach Figur 6 im Betriebsmodus der Abschwächung: Wird das Magnetfeld, welches durch die Spule 1 erzeugt wird, verpolt, so wird der magnetische Fluss (Magnetfeldlinien M), welcher durch die Permanentmagnete 4a und 4c erzeugt wird, aus den MRF-Spalten 2ab und 2bc herausgedrängt. Der magnetische Fluss schließt sich nun über das Außenjoch (Gehäuseteile 3a-1, 3b und 3c-1) der Anordnung. Wird die nicht-magnetische Anordnung 5d in der Mitte zwischen der Spule 1 richtig ausgelegt, so ist eine Abschwächung der Flussdichte auf nahezu 0 Tesla möglich.

## Patentansprüche

1. Magnetorheologische Drehmomentübertragungsvorrichtung mit zwei durch mindestens einen Drehmomentübertragungsspalt (2), der zumindest teilweise mit einem magnetorheologischen Material (2MRF) füllbar und/oder gefüllt ist, getrennten, relativ zueinander um eine Rotationsachse (R) rotierbaren Vorrichtungsteilen, wobei
das zur Erzeugung des magnetischen Flusses im Drehmomentübertragungsspalt (2) ausgebildete Magnetkreissystem der Drehmomentübertragungsvorrichtung neben mindestens einem Elektromagneten (1) mindestens zwei Permanentmagnete (4) umfasst, wobei
das Magnetkreissystem der Drehmomentübertragungsvorrichtung mindestens zwei Magnetkreise (ersten und zweiten Magnetkreis) aufweist, wobei ein Elektromagnet (1) im zweiten Magnetkreis angeordnet ist und wobei ein Permanentmagnet (4) im ersten Magnetkreis angeordnet ist,
wobei
das Magnetkreissystem weiterhin mindestens einen nichtmagnetischen Einsatz (5, 6) umfasst, wobei ein dreidimensionaler Festkörper (5) und/oder ein luftgefülltes Volumen (6) als nichtmagnetischer Einsatz vorgesehen ist/sind, und
wobei der nichtmagnetische Einsatz zwischen den beiden Permanentmagneten sitzt.

2. Magnetorheologische Drehmomentübertragungsvorrichtung nach dem vorhergehenden Anspruch,
***dadurch gekennzeichnet, dass***
der Elektromagnet, der Permanentmagnet und/oder mindestens ein nichtmagnetischer Einsatz räumlich so ausgebildet und/oder positioniert sind, dass der durch den Elektromagneten (1) erzeugte zweite magnetische Fluss (M2) durch den zweiten Magnetkreis und vorzugsweise nicht durch den Permanentmagneten und dass der durch den Permanentmagneten (4) erzeugte erste magnetische Fluss (M1) durch den ersten Magnetkreis führt und dass der erste und der zweite Fluss durch den Drehmomentübertragungsspalt (2) führen,
und/oder
dass mindestens ein Elektromagnet in einem Magnetkreis ohne Permanentmagnet angeordnet ist und dass mindestens ein Permanentmagnet in einem Magnetkreis ohne Elektromagnet angeordnet ist,
und/oder
dass im zweiten Magnetkreis nur Elektromagnete angeordnet sind und im ersten Magnetkreis nur Permanentmagnete angeordnet sind,
und/oder
dass in keinem der Magnetkreise zugleich ein Elektromagnet und ein Permanentmagnet angeordnet sind,
und/oder
der zweite Magnetkreis einen Elektromagneten (1) und einen nichtmagnetischen Einsatz (zweiter nichtmagnetischer Einsatz 5b, 6) umfasst und/oder dass der erste Magnetkreis einen Permanentmagneten (4) und einen nichtmagnetischen Einsatz (erster nichtmagnetischer Einsatz 5a) umfasst.

3. Magnetorheologische Drehmomentübertragungsvorrichtung nach einem der vorhergehenden Ansprüche,
***dadurch gekennzeichnet, dass***
ein Permanentmagnet (4) und ein Elektromagnet (1) in Rotationsachsrichtung gesehen beabstandet voneinander angeordnet sind,
und/oder
dass ein Permanentmagnet (4) zentrisch auf der Rotationsachse (R) angeordnet ist und/oder dass ein Elektromagnet (1) radial beabstandet von der und radialsymmetrisch um die Rotationsachse (R) angeordnet ist.

4. Magnetorheologische Drehmomentübertragungsvorrichtung nach einem der vorhergehenden Ansprüche,
***dadurch gekennzeichnet, dass***
der Drehmomentübertragungsspalt (2) im wesentlichen parallel zur Rotationsachse (R) angeordnet ist (Axial- oder Glockenkonfiguration) oder dass der Drehmomentübertragungsspalt (2) im wesentlichen senkrecht zur Rotationsachse (R) angeordnet ist (Radial- oder Scheibenkonfiguration),
und/oder
durch mehrere, insbesondere im wesentlichen parallel zueinander angeordnete Drehmomentübertragungsspalte.

5. Magnetorheologische Drehmomentübertragungsvorrichtung nach Anspruch 1,
***dadurch gekennzeichnet, dass***
der Elektromagnet und die beiden Permanentmagnete entlang einer Achse, insbesondere beabstandet voneinander und entlang der Rotationsachse und bevorzugt auch rotationssymmetrisch um diese, angeordnet sind, wobei bevorzugt der Elektromagnet zwischen den beiden Permanentmagneten angeordnet ist,
und/oder
durch einen nicht-magnetischen Einsatz (5d), welcher bevorzugt zwischen den beiden Permanentmagneten und/oder bevorzugt von der Rotationsachse aus gesehen konzentrisch um diese und innerhalb des Elektromagneten angeordnet ist.

6. Magnetorheologische Drehmomentübertragungsvorrichtung nach einem der vorhergehenden Ansprüche,
***dadurch gekennzeichnet, dass***
ein Permanentmagnet (4) mindestens eines der nachfolgenden hartmagnetischen Materialien enthält und/oder daraus besteht: NdFeB, eine Legierung enthaltend Sm und Co, insbesondere SmCo₂, eine Legierung enthaltend Al, Ni und Co, insbesondere AlNiCo, Ferrite.

7. Magnetorheologische Drehmomentübertragungsvorrichtung nach einem der vorhergehenden Ansprüche,
***gekennzeichnet durch***
die Ausbildung als Kupplung, Bremse, Feststell- oder Blockiervorrichtung, Sicherheitsschalter, haptisches Gerät oder als Mensch-Maschine-Schnittstellenelement.

## Claims

1. Magnetorheological torque transmission device, having two device parts which are separated by at least one torque transmission gap (2), which can be filled and/or is filled at least partially with a magnetorheological material (2MRF), and can be rotated relative to each other about an axis of rotation (R), wherein
the magnetic circuit system of the torque transmission device, which system is configured to produce the magnetic flux in the torque transmission gap (2), includes, in addition to at least one electromagnet (1), at least two permanent magnets (4), wherein
the magnetic circuit system of the torque transmission device has at least two magnetic circuits (first and second magnetic circuit), an electromagnet (1) being disposed in the second magnetic circuit and a permanent magnet (4) being disposed in the first magnetic circuit,
wherein
the magnetic circuit system includes in addition at least one non-magnetic insert (5, 6), wherein a three-dimensional solid body (5) and/or an air-filled volume (6) is/are provided as non-magnetic insert, and
wherein the non-magnetic insert sits between the two permanent magnets.

2. Magnetorheological torque transmission device according to the preceding claim,
***characterised in that***
the electromagnet, the permanent magnet and/or at least one non-magnetic insert are configured and/or positioned spatially such that the second magnetic flux (M2) produced by the electromagnet (1) leads through the second magnetic circuit and preferably not through the permanent magnet and that the first magnetic flux (M1) produced by the permanent magnet (4) leads through the first magnetic circuit and that the first and the second flux lead through the torque transmission gap (2),
and/or
**in that** at least one electromagnet is disposed in a magnetic circuit without a permanent magnet and **in that** at least one permanent magnet is disposed in a magnetic circuit without an electromagnet,
and/or
**in that** only electromagnets are disposed in the second magnetic circuit and only permanent magnets are disposed in the first magnetic circuit,
and/or
**in that** an electromagnet and a permanent magnet are disposed in neither of the magnetic circuits together,
and/or
**in that** the second magnetic circuit comprises an electromagnet (1) and a non-magnetic insert (second non-magnetic insert 5b, 6) and/or **in that** the first magnetic circuit comprises a permanent magnet (4) and a non-magnetic insert (first non-magnetic insert 5a).

3. Magnetorheological torque transmission device according to one of the preceding claims,
***characterised in that***
a permanent magnet (4) and an electromagnet (1) are disposed at a spacing from each other, observed in the axis of rotation direction,
and/or
**in that** a permanent magnet (4) is disposed centrally on the axis of rotation (R) and/or **in that** an electromagnet (1) is disposed at a radial spacing from and radially symmetrically about the axis of rotation (R).

4. Magnetorheological torque transmission device according to one of the preceding claims,
***characterised in that***
the torque transmission gap (2) is disposed essentially parallel to the axis of rotation (R) (axial or bell-shaped configuration) or **in that** the torque transmission gap (2) is disposed essentially perpendicular to the axis of rotation (R) (radial or disc configuration),
and/or
***characterised by*** a plurality of torque transmission gaps which are disposed in particular essentially parallel to each other.

5. Magnetorheological torque transmission device according to claim 1,
***characterised in that***
the electromagnet and the two permanent magnets are disposed along an axis, in particular at a spacing from each other and along the axis of rotation and preferably also rotationally symmetrically about the latter, the electromagnet being disposed preferably between the two permanent magnets,
and/or
***characterised by*** a non-magnetic insert (5d) which is disposed preferably between the two permanent magnets and/or preferably, observed from the axis of rotation, concentrically about the latter and within the electromagnet.

6. Magnetorheological torque transmission device according to one of the preceding claims,
***characterised in that***
a permanent magnet (4) contains and/or comprises at least one of the subsequent hard magnetic materials: NdFeB, an alloy containing Sm and Co, in particular SmCo₂, an alloy containing Al, Ni and Co, in particular AlNiCo, ferrites.

7. Magnetorheological torque transmission device according to one of the preceding claims,
***characterised by***
the configuration as clutch, brake, immobilising or locking device, safety switch, haptic appliance or as a man-machine interface element.

## Revendications

1. Dispositif transmetteur de couple magnétorhéologique, comprenant deux parties de dispositif, pouvant tourner l'une par rapport à l'autre autour d'un axe de rotation (R), séparées par au moins un entrefer de transmission de couple (2), qui au moins en partie peut être rempli et/ou est rempli d'un matériau magnétorhéologique (2MRF), dans lequel
le système de circuit magnétique, configuré pour la production du flux magnétique dans l'entrefer de transmission de couple (2), du dispositif transmetteur de couple, comprend en plus d'au moins un électro-aimant (1) au moins deux aimants permanents (4),
le système de circuit magnétique du dispositif transmetteur de couple comprenant au moins deux circuits magnétiques (un premier et un deuxième circuits magnétiques), un électro-aimant (1) étant disposé dans le deuxième circuit magnétique et un aimant permanent (4) étant disposé dans le premier circuit magnétique,
le système de circuit magnétique comprenant en outre au moins un insert amagnétique (5, 6), un solide tridimensionnel (5) et/ou un volume (6) rempli d'air étant prévus en tant qu'insert amagnétique, et
l'insert amagnétique étant logé entre les deux aimants permanents.

2. Dispositif transmetteur de couple magnétorhéologique selon la revendication précédente, **caractérisé en ce que**
l'électro-aimant, l'aimant permanent et/ou au moins un insert amagnétique sont conçus et/ou positionnés spatialement de telle sorte que le deuxième flux magnétique (M2), produit par l'électro-aimant (1), passe par le deuxième circuit magnétique et de préférence ne passe pas par l'aimant permanent, et que le premier flux magnétique (M1), produit par l'aimant permanent (4), passe par le premier circuit magnétique, et que le premier et le deuxième flux passent par l'entrefer de transmission de couple (2),
et/ou
qu'au moins un électro-aimant est disposé dans un circuit magnétique sans aimant permanent, et qu'au moins un aimant permanent est disposé dans un circuit magnétique sans électro-aimant,
et/ou
que seuls des électro-aimants sont disposés dans le deuxième circuit magnétique, et que seuls des aimants permanents sont disposés dans le premier circuit magnétique,
et/ou
que dans aucun des circuits magnétiques ne sont disposés simultanément un électro-aimant et un aimant permanent,
et/ou
que le deuxième circuit magnétique comprend un électro-aimant (1) et un insert amagnétique (deuxième insert amagnétique 5b, 6), et/ou que le premier circuit magnétique comprend un aimant permanent (4) et un insert amagnétique (premier insert amagnétique 5a).

3. Dispositif transmetteur de couple magnétorhéologique selon l'une des revendications précédentes,
**caractérisé en ce que**
un aimant permanent (4) et un électro-aimant (1) sont disposés à distance l'un de l'autre quand on regarde dans la direction de l'axe de rotation,
et/ou
qu'un aimant permanent (4) est disposé en position centrale sur l'axe de rotation (R) et/ou qu'un électro-aimant (1) est disposé radialement à distance de l'axe de rotation (R) et en symétrie radiale autour de ce dernier.

4. Dispositif transmetteur de couple magnétorhéologique selon l'une des revendications précédentes,
**caractérisé en ce que**
l'entrefer de transmission de couple (2) est pour l'essentiel disposé parallèlement à l'axe de rotation (R) (configuration axiale, ou en cloche), ou que l'entrefer de transmission de couple (2) est pour l'essentiel disposé perpendiculairement à l'axe de rotation (R) (configuration radiale, ou en disque),
et/ou
par plusieurs entrefers de transmission de couple, disposés en particulier pour l'essentiel parallèlement les uns aux autres.

5. Dispositif transmetteur de couple magnétorhéologique selon la revendication 1,
**caractérisé en ce que**
l'électro-aimant et les deux aimants permanents sont disposés le long d'un axe, en particulier à distance les uns des autres, et le long de l'axe de rotation, et de préférence aussi en symétrie de rotation autour de ce dernier, l'électro-aimant étant de préférence disposé entre les deux aimants permanents,
et/ou
par un insert amagnétique (5d), qui de préférence est disposé entre les deux aimants permanents et/ou de préférence, quand on regarde à partir de l'axe de rotation, concentriquement autour de ce dernier et à l'intérieur de l'électro-aimant.

6. Dispositif transmetteur de couple magnétorhéologique selon l'une des revendications précédentes,
**caractérisé en ce que**
un aimant permanent (4) contient au moins l'un des matériaux magnétiques durs suivants, et/ou en est constitué : NdFeB, un alliage contenant Sm et Co, en particulier SmCo₂, un alliage contenant Al, Ni et Co, en particulier AlNiCo, le ferrite.

7. Dispositif transmetteur de couple magnétorhéologique selon l'une des revendications précédentes,
**caractérisé par** une configuration en tant qu'embrayage, frein, dispositif de fixation ou de blocage, interrupteur de sécurité, appareil haptique, ou élément d'interface homme-machine.
